Europäisches Patentamt

European Patent Office

Office européen des brevets

(11) Numéro de publication: **0 291 039 B1**

(19)

(12) # FASCICULE DE BREVET EUROPEEN

(45) Date de publication de fascicule du brevet: **30.09.92**

(21) Numéro de dépôt: **88107600.4**

(22) Date de dépôt: **11.05.88**

(51) Int. Cl.⁵: **C25B 13/04**, C08J 5/22, //G21F9/06

(54) **Film séparateur pour un électrolyseur de l'eau acide moyennement tritiée et procédé pour sa fabrication.**

(30) Priorité: **13.05.87 LU 86876**

(43) Date de publication de la demande:
**17.11.88 Bulletin 88/46**

(45) Mention de la délivrance du brevet:
**30.09.92 Bulletin 92/40**

(84) Etats contractants désignés:
**BE DE ES FR GB GR IT LU NL**

(56) Documents cités:
**EP-A- 0 192 926**
**EP-A- 0 202 699**
**FR-A- 2 378 106**
**US-A- 3 541 030**
**US-A- 4 253 936**

(73) Titulaire: **COMMUNAUTE EUROPEENNE DE L'ENERGIE ATOMIOUE (EURATOM)**
**Bâtiment Jean Monnet-DG XIII/A1 Plateau du Kirchberg**
**L-2920 Luxembourg(LU)**

(72) Inventeur: **Giuffre, Luigi**
**Via Passo di Fargorida 6**
**I-20148 Milano(IT)**
Inventeur: **Pierini, Giancarlo**
**Via Campigli 91**
**I-21100 Varese(IT)**
Inventeur: **Tempesti, Ezio**
**Via Abruzzi 1**
**I-20131 Milano(IT)**
Inventeur: **Modica, Giovanni**
**Via Archimede 41**
**I-20129 Milano(IT)**
Inventeur: **Maffi, Silvia**
**Via Mossotti 2**
**I-20159 Milano(IT)**

(74) Mandataire: **Weinmiller, Jürgen**
**Lennéstrasse 9 Postfach 24**
**W-8133 Feldafing(DE)**

**Description**

L'invention se réfère à un film séparateur pour un électrolyseur de l'eau acide moyennement tritiée et à un procédé de fabrication d'un tel film.

Pour un séparateur applicable à l'électrolyse acide de l'eau lourde et de l'eau tritiée, on exige surtout une stabilité chimique par rapport à des solutions acides et par rapport à un rayonnement beta. En outre, ce séparateur doit être mouillable sans difficulté. Cette dernière caractéristique est nécessaire pour éviter la formation de bulles gazeuses dans le séparateur, ce qui aurait pour effet de réduire la tension et de mélanger les gaz.

La séparation isotopique d'hydrogène par électrolyse est basée sur la différence de décharge potentielle à la cathode. Pour obtenir des gaz purement cathodiques, il est nécessaire d'éviter tout mélange avec les gaz anodiques constitués par de l' oxygène. Des séparateurs connus répondent à cette exigence en utilisant des matériaux différents. Les séparateurs en asbeste, qui sont généralement utilisés dans l'électrolyse alcaline de l'eau naturelle jusqu'à une température de 80°C, sont attaqués par de l'eau tritiée. L'échange isotopique entre l' hydrogène et le tritium a en effet lieu dans des chaînes d'hydrate et de polysilicate de magnésium, qui constituent la structure de base polymerique de ce matériau. Le tritium échangé se décompose "in situ" dans la structure de l'asbeste en émettant un rayonnement beta et en se transformant en gaz. Cette action, qui a lieu pratiquement à tous les endroits de la structure fibreuse, provoque la destruction rapide de l'asbeste.

Lors de la recherche d'autres matériaux pour le film séparateur, on a étudié aussi des matériaux polymérisés inorganiques. Ces matériaux présentent une inactivité chimique très élevée et une bonne mouillabilité, même à des conditions d'une électrolyse acide. Néanmoins, ces matériaux ne peuvent que rarement être préparés sous forme de fibres ou de films microporeux, car leur état d'aggrégation est en général pulvérulent. Parmi les matériaux organiques polymérisés, il n'y en a que très peu qui résistent à des conditions sévéres existant dans une cellule électrolytique acide. Parmi ces matériaux il y a quelques-uns tels que le polytétrafluoréthylène, le polyphénylesulfure, les polyphénylènes, qui sont suffisamment résistants chimiquement, mais leur mouillabilité ne suffit pas pour l'application visée.

Ensuite, on a étudié du polysulphone, qui peut être produit sous forme de fibres ou d'un film microporeux. Comme dans le cas précédent, on observe des bulles gazeuses à l'intérieur du séparateur. On a alors préparé des séparateurs pour l'électrolyse alcaline en mélangeant l'acide polyantimonique avec du polysulphone. Or, ces séparateurs ne se sont pas relevés comme efficients, car l'acide polyantimonique se dissout dans l'ambiance alcaline en laissant la matrice du polymère organique, qui est peu mouillable et se remplit de bulles de gaz.

Le but de l'invention est de proposer un nouveau matériau pour un séparateur composite comportant un liant organique et un échangeur de ions inorganique. Un tel séparateur doit être résistant à l'eau tritiée et doit présenter une bonne mouillabilité.

Ce but est atteint selon l'invention par le fait que le film contient un liant constitué d'un polymère aromatique tel qu'un polysulphone, un polyéthersulphone, un polyphénylène sulphure ou un polytétrafluoréthylène à raison de 30 à 99%, de préférence de 45 à 96% en poids, ainsi qu'entre 70 et 1% en poids, de préférence entre 55 et 4% en poids, d'acide polyantimonique. Un tel film séparateur peut être fabriqué selon un procédé tel que spécifié dans les revendications 2 à 4.

L'échangeur de ions appartient à la famille des acides polyantimoniques ayant la formule générale $Sb_2O_3 \cdot nH_2O$. Ces acides peuvent être obtenus par hydrolyse de $SbCl_3$. La présence de ces acides garantit une bonne mouillabilité et une grande capacité pour repulser des bulles gazeuses. Un autre point important en faveur de l'acide polyantimonique est qu'il est capable d'échanger des ions d'hydrogène avec l'électrolyte.

Les séparateurs selon l'invention se présentent sous forme de membranes imperméables à l'électrolyte, ou bien comme membranes poreuses, qui sont perméables à l'électrolyte. Les séparateurs composites selon l'invention sont très résistants à l'abrasion mécanique et peuvent être fabriqués avec une grande stabilité de leur structure, ce qui permet d'obtenir des séparateurs très minces. Il est donc possible de maintenir avec sécurité des distances prédérminées et faibles entre anode et cathode, et d'augmenter le rendement faradique.

Comme résultat inattendu, il a été trouvé qu'en mélangeant un polymère organique du type aromatique avec un polymère inorganique d'acide polyantimonique, on obtient un séparateur d'une haute résistance l'ambiance acide et à l'attaque mécanique et une bonne mouillabilité en présence de l'eau lourde et tritiée. En outre, le séparateur selon l'invention permet de récupérer des gaz cathodiques très purs (supérieur à 99,99%).

En modifiant la quantité d'acide polyantimonique présente dans la structure et en modifiant sa méthode de préparation, on peut réaliser des séparateurs adaptés à des applications très diverses. Il a en outre été trouvé qu'en mélangeant aux matériaux composites pendant la phase de préparation un composé polymérique tel que le polyéthylèneglycole, le polypropylèneglycole, les éthers et les esters de cellulose, l'anhydride polymaléique, et en général tout polymère ou composé qui se dissout facilement dans un solvant, on obtient une structure poreuse des matériaux composites, après traitement dans ce solvant, la porosité de cette structure dépendant du taux en composé polymérique soluble.

L'invention sera décrite ci-après à l'aide de quelques exemples.

Exemple 1

On prépare dans 10 ml de N-méthylpyrrolidone une solution contenant $SbCl_3$ et polysulphone (vendu par Union Carbide sous la dénomination Udel 3500) dans un rapport molaire 1:3. La solution est agitée à température ambiante pendant 6 heures, et puis elle est versée sur un support en verre et répartie à épaisseur constante à l'aide d'une lame métallique. Le support en verre avec la couche de la solution est plongé dans de l'eau à température ambiante. On observe la migration du solvant (N-méthylpyrrolidone) vers l'eau et une formation simultanée de la membrane.

En même temps, la chlorure d'antimoine est hydrolysée et se transforme en acide polyantimonique.

La membrane se détache spontanément du support et elle est mise dans l'eau déionisée pour 24 heures. Pendant l'hydrolyse, une partie du chlorure de l'antimoine passe dans l'eau, ce qui explique pourquoi le contenu en chlorure d'antimoine dans le film n'est plus identique à celui dans le mélange initial.

Cette membrane présente une rétention de l'eau d'environ 93%, qui reste la même après une irradiation à 32 Mrad. La perte de poids dans l'acide sulphurique de concentration 10% après 100 heures de traitement est d'environ 0,4%, alors que la chute de tension 25°C est de 0,84-0,75-0,68-1,26 $\Omega$ $cm^2$ dans l'acide sulphurique de 10-20-30-50% (mesure faite à 1000 Hz). Le contenu final en acide polyantimonique est d'environ 3,3% du poids total de la membrane.

## Exemple 2

Même préparation que dans l'exemple 1, mais le rapport molaire est de 1:1

| Pureté des gaz cathodiques | Rétention de l'eau | | Perte de poids (%) | | | | Chute de tension ($\Omega$ cm² à 25°C) | | | |
|---|---|---|---|---|---|---|---|---|---|---|
| | au départ | après 32 Mrad | $H_2SO_4$ 10% | 20% | 30% | 50% | $H_2SO_4$ 10% | 20% | 30% | 50% |
| 99,98% | 135% | 73% | 2,63 | 1,35 | 4,17 | 4,14 | 0,72 | 0,67 | 0,50 | 0,94 |

Le contenu en acide polyantimonique est d'environ 16,5% du poids total du film.

## Exemple 3

Même préparation que dans l'exemple 1, mais le rapport molaire est 1,5:1

| Pureté des gaz cathodiques | Rétention de l'eau | | Perte de poids (%) | | | | Chute de tension ($\Omega$ cm² à 25°C) | | | |
|---|---|---|---|---|---|---|---|---|---|---|
| | au départ | après 32 Mrad | $H_2SO_4$ 10% | 20% | 30% | 50% | $H_2SO_4$ 10% | 20% | 30% | 50% |
| 99,99% | 148% | 144% | 2 | 3,64 | 1,23 | 3,84 | 0,68 | 0,60 | 0,42 | 0,77 |

Le contenu en acide polyantimonique est d'environ 30,2% du poids total du film.

## Exemple 4

Même préparation que dans l'exemple 1, mais le rapport molaire est 2:1

| Pureté des gaz cathodiques | Rétention de l'eau | | Perte de poids (%) | | | | Chute de tension ($\Omega$ cm² à 25°C) | | | |
|---|---|---|---|---|---|---|---|---|---|---|
| | au départ | après 32 Mrad | $H_2SO_4$ 10% | 20% | 30% | 50% | $H_2SO_4$ 10% | 20% | 30% | 50% |
| 99,99% | 180% | 146% | 1,79 | 3,40 | 2,12 | 15,03 | 0,56 | 0,30 | 0,28 | 0,65 |

Le contenu en acide polyantimonique est d'environ 50,1% du poids total du film.

## Exemple 5

Même préparation que dans l'exemple 1, mais le rapport molaire est 2,5:1

| Pureté des gaz cathodiques | Rétention de l'eau | | Perte de poids (%) | | | | Chute de tension ($\Omega$ cm² à 25°C) | | | |
|---|---|---|---|---|---|---|---|---|---|---|
| | au départ | après 32 Mrad | $H_2SO_4$ 10% | 20% | 30% | 50% | $H_2SO_4$ 10% | 20% | 30% | 50% |
| 99,99% | 360% | 140% | 6,19 | 4,75 | 6,24 | 6,49 | 0,42 | 0,25 | 0,18 | 0,58 |

Le contenu en acide polyantimonique est d'environ 55,1% du poids total du film.

## Exemple 6

Le film est préparé comme dans l'exemple 1, mais en utilisant du polyéthersulphone vendu par la société ICI sous la dénomination VICTREX. Ce film a un contenu en acide polyantimonique de 3,3% par rapport au poids total du film, une rétention de l'eau de 95%, qui reste constante après irradiation à 32 Mrad. La perte de poids après traitement dans l'acide sulphurique à 10% pendant 400 heures est d'environ 0,5%. La chute de tension mesurée au courant alternatif de 1000 Hz est de 0,83; 0,76; 0,67; 1,23 $\Omega$ cm$^2$ dans l'acide sulphurique de 10, 20, 30, 50% respectivement.

Exemple 7

On prépare une suspension d'une poudre de polytétrafluoréthylène (PTFE) dans 1,2-dichloréthane, auquel on ajoute Sb$_2$O$_3$ à raison de 20% par rapport au poids total. La suspension est versée sur un support plan en verre et on laisse évaporer le solvant. Le film ainsi obtenu est comprimé à chaud à une pression de 294,3 kPa (3 kg/cm$^2$) et il est porté à la température de frittage du PTFE. Le film obtenu présente une rétention de l'eau d'environ 25%, alors qu'après traitement pendant 100 heures dans l'acide sulphurique de 10%, la rétention de l'eau est d'environ 15%. La chute de tension dans l'acide sulphurique à 10, 20, 30, 50% respectivement est de 1,8; 2,7; 3,2; 4,7 $\Omega$ cm$^2$ respectivement.

Exemple 8

Même préparation que selon l'exemple 1, mais on ajoute à la solution de N-méthylpyrrolidone du polyéthylèneglycol ayant un poids moléculaire de 6000. La quantité du polyéthylèneglycol est de 5% en poids par rapport au poids total du film.

Le film ainsi obtenu présente une rétention de l'eau de 99%, et après traitement dans l'acide sulphurique de 10% pendant 100 heures, la rétention de l'eau est de 97%. La chute de tension dans l'acide sulphurique de 10, 20, 30, 50% respectivement est de 0,6; 0,5; 0,4; 0,9 $\Omega$ cm$^2$ respectivement.

Exemple 9

A une solution de 10 ml de 1,2-dichloréthane contenant du polysulphone, on ajoute du Sb$_2$O$_3$ à raison de 20% en poids par rapport au poids total. La solution est versée sur un support plan en verre et on laisse évaporer le solvant. Le film ainsi obtenu présente une rétention de l'eau d'environ 70% et d'environ 68% après traitement dans l'acide sulphurique de 10% pendant 100 heures. La chute de tension dans l'acide sulphurique d'une concentration 10, 20, 30, 50% est de 1,5; 1,8; 2,0; 2,5 $\Omega$ cm$^2$ respectivement.

**Revendications**

1. Film séparateur pour un électrolyseur de l'eau acide moyennement tritiée, caractérisé en ce qu'il contient un liant constitué d'un polymère organique tel qu'un polysulphone, un polyéthersulphone, un polyphénylène sulphure, ou un polytétrafluoréthylène, ainsi qu'entre 55 et 4% en poids d'acide polyantimonique.

2. Procédé de fabrication d'un film séparateur selon la revendication 1, caractérisé en ce qu'on dissoud un polymère organique tel qu'un polysulphone, un polyéthersulphone, un polyéthylène sulphure ou un polytétrafluoréthylène dans un solvant qui est soluble dans l'eau, qu'on ajoute à cette solution du SbCl$_3$, qu'on verse ce mélange sur un support plan, qu'on fait disparaître ledit solvant, qu'on traite le film ainsi obtenu par de l'eau à une témérature inférieure à 50°C, qu'on enlève ensuite le film dudit support et qu'on le met enfin dans de l'eau déionisée pendant 24 heures.

3. Procédé selon la revendication 2, caractérisé en ce qu'on utilise comme solvant du N-méthylpyrrolidone ou du 1,2-di-chloreéthane.

4. Procédé selon la revendication 3, caractérisé en ce qu'on ajoute audit solvant du polyéthylèneglycol ayant un poids moléculaire de 6000 à une quantité comprise entre 0,5 et 35% du poids total du film final, de préférence entre 1 et 20%.

**Claims**

1. Separator film for an electrolyser for moderately tritiated acetic water, characterized in that it contains a binder consisting of an organic polymer such as a polysulphone, a polyethersulphone, a polyphenylene sulphide or a polytetrafluoroethylene, as well as between 55 and 4% by weight of polyantimonic acid.

**2.** Process for the manufacture of a separator film according to Claim 1, characterized in that an organic polymer such as a polysulphone, a polyethersulphone, a polyethylene sulphide or a polytetrafluoroethylene is dissolved in a solvent which is soluble in water, that SbCl$_3$ is added to this solution, that this mixture is poured onto a flat support, that the said solvent is caused to disappear, that the film thus obtained is treated with water at a temperature below 50°C, that the film is then taken off the said support and that it is finally placed in deionized water for 24 hours.

**3.** Process according to Claim 2, characterized in that N-methylpyrrolidone or 1,2-dichloroethane is employed as a solvent.

**4.** Process according to Claim 3, characterized in that polyethylene glycol which has a molecular weight of 6,000 is added to the said solvent in a quantity of between 0.5 and 35%, preferably between 1 and 20%, of the total weight of the final film.

**Patentansprüche**

**1.** Separatorfolie für eine Elektrolysezelle für mäßig tritiumhaltiges saures Wasser, dadurch gekennzeichnet, daß sie ein Bindemittel, das aus einem organischen Polymer wie z.B. einem Polysulfon, einem Polyäthersulfon, einem Polyphenylensulfid oder einem Polytetrafluoräthylen besteht, sowie zwischen 55 und 4 Gew.% Polyantimonsäure enthält.

**2.** Verfahren zur Herstellung einer Separatorfolie nach Anspruch 1, dadurch gekennzeichnet, daß man ein organisches Polymer wie Polysulfon, Polyäthersulfon, Polyäthylensulfid oder ein Polytetrafluoräthylen in einem Lösungsmittel löst, das in Wasser löslich ist, daß man zu dieser Lösung SbCl$_3$ hinzufügt, daß man diese Mischung auf einen ebenen Träger gießt, daß man das Lösungsmittel entfernt, daß man die so erhaltene Folie mit Wasser bei einer Temperatur unter 50°C behandelt, daß man anschließend die Folie von diesem Träger abhebt und sie schließlich während 24 Stunden in ionenfreies Wasser bringt.

**3.** Verfahren nach Anspruch 2, dadurch gekennzeichnet, daß man als Lösungsmittel N-Methylpyrrolidon oder 1,2-Dichloräthan verwendet.

**4.** Verfahren nach Anspruch 3, dadurch gekennzeichnet, daß man diesem Lösungsmittel Polyäthylenglykol mit einem Molekulargewicht von 6000 in einer Menge zwischen 0,5 und 35% des Gesamtgewichts der endgültigen Folie, vorzugsweise zwischen 1 und 20% hinzufügt.